# EUROPEAN PATENT APPLICATION

(11) **EP 2 464 130 A2**
(43) Date of publication of application: **13.06.2012**
(21) Application number: 11176133.4
(22) Date of filing: 01.08.2011
(51) Int. Cl.: H04N 13/04

(54) **Video display apparatus which collaborates with three-dimensional glasses for presenting stereoscopic images and control method applied to the video display apparatus**

(30) Priority: 08.12.2010 TW 099142795
(71) Applicant: Acer Incorporated, New Taipei City 221 (TW)
(72) Inventor: Ko, Chueh-Pin, 221 New Taipei City (TW)
(74) Representative: Becker, Eberhard

(57) **Abstract**

A control method applied to a video display apparatus (104) collaborating with three-dimensional glasses (102) for presenting stereoscopic images includes sequentially transmitting a first video driving signal and a second video driving signal corresponding to a first video frame to a display screen (122) for respectively driving a first display region (123_1) and a second display region (123_2) of the display screen (122); after transmitting the first video driving signal to the display screen (122) is accomplished, activating a first backlight source (125_1) of a scanning backlight module (124) during a first period to provide backlight to the first display region (123_1) driven by the first video driving signal for image display; and after transmitting the second video driving signal to the display screen (122) is accomplished, activating a second backlight source (125_2) of the scanning backlight module (124) during a second period in order to provide backlight to the second display region (123_2) driven by the second video driving signal for image display.

## Description

This invention relates to a video display apparatus capable of collaborating with three-dimensional glasses for presenting stereoscopic images and a control method thereof according to the pre-characterizing clauses of claims 1 and 8.

With the development of science and technology, users are pursing stereoscopic and more real video displays rather than high quality videos. There are two techniques of present stereoscopic image display. One uses a video output apparatus which collaborates with glasses (such as anaglyph glasses, polarization glasses or shutter glasses) while the other directly uses a video display apparatus without any accompanying glasses.

Shutter glasses are widely used by users to view stereoscopic images presented by a video display apparatus. The shutter glasses include two shutter lenses, and allow a user's left eye to see left-eye videos and a user's right eye to see right-eye videos by properly switching the shutter lenses between an on state (also called open state) and an off state (also called close state). For example, when the shutter lens corresponding to the left eye is in an on state, the shutter lens corresponding to the right eye is in an off state; and vice versa. Therefore, the ambient brightness perceived by the user is lower than a real ambient brightness.

If the video display apparatus which collaborates with the shutter glasses is a liquid crystal display (LCD) apparatus, a crosstalk of videos may appear due to inherent display characteristics of the LCD apparatus when the user is watching the video. For example, the display panel utilized in the LCD apparatus is composed of a plurality of liquid crystal (LC) cells. Each LC cell requires a rotation period to be switched from a state corresponding to a gray value to another state corresponding to another gray value. The rotation period is also called gray-to-gray latency. Therefore, supposing that the LC cell stays in a state corresponding to a specific gray value in the current video frame, the LC cell will be driven to rotate when the current video frame is to be refreshed by the next video frame. However, if the shutter glasses are activated before the LC cell starts to rotate or when the LC cell is currently rotating, the user will not see the refreshed video frame correctly. Taking the LCD apparatus operated under the refresh rate at 120 Hz as an example, the LCD apparatus displays a left-eye video and a right-eye video alternately within a plurality of video frame outputting periods. Each video frame outputting period includes a video driving period and a video stabilizing period. During each video driving period, the LCD panel refreshes the current video frame according to the display data. That is, the LCD panel replaces a previously displayed video frame with a current video frame to be displayed. Therefore, before the current video frame to be displayed has completely replaced the previously displayed video frame, the output of the LCD panel in the video driving period includes part of the current video frame and part of the previous video frame; on the other hand, the LCD panel waits for stabilization of the current video frame to be displayed in the following video stabilizing period (e.g., a vertical blanking interval, VBI). However, since each LC cell requires the gray-to-gray latency to accomplish the rotation, it is possible that only part of the LC cells in the LCD panel finish the required rotation at the start point of the video stabilizing period, and part of the LC cells in the LCD panel does not finish the required rotation at the end point of the stabilizing period. In other words, if the gray-to-gray latency of the LCD panel is longer, the percentage of LC cells that have finished the required rotation at the end point of the video stabilizing period of the LCD panel is lower. In general, the conventional shutter glasses enter the on/open state during the video stabilizing period. Therefore, with the conventional plain backlight module providing required backlight in each video stabilizing period, the LCD panel with a longer gray-to-gray latency is less suitable to collaborate with shutter glasses for displaying stereoscopic videos.

This in mind, the present invention aims at providing a video display apparatus which collaborates with three-dimensional glasses for presenting stereoscopic images to solve the problem mentioned above. This is achieved by a control method for presenting stereoscopic images and a video display apparatus according to claims 1 and 8, respectively. The dependent claims pertain to corresponding further developments and improvements.

As will be seen more clearly from the detailed description below, a claimed control method further comprises the following steps: sequentially transmitting a first video driving signal and a second video driving signal corresponding to a first video frame to a display screen, for respectively driving a first display region and a second display region of the display screen; after transmitting the first video driving signal to the display screen is accomplished, activating a first backlight source of a scanning backlight module during a first period in order to provide backlight to the first display region which is driven by the first video driving signal for image display; and after the step of transmitting the second video driving signal to the display screen is accomplished, activating a second backlight source of the scanning backlight module during a second period in order to provide backlight to the second display region which is driven by the second video driving signal for image display.

According to a second aspect of the exemplary embodiment of the present invention, a claimed video display apparatus which collaborates with three-dimensional glasses for presenting stereoscopic images further comprises a display screen, a scanning backlight module, a display control circuit and a backlight control circuit. The display screen includes at least a first display region and a second display region. The scanning backlight module includes at least a first backlight source and a second backlight source. The display control circuit is coupled to the display screen, and used for sequentially transmitting a first video driving signal and a second video driving signal corresponding to a first video frame to the display screen for respectively driving the first display region and the second display region. The backlight control circuit is coupled to the scanning backlight module. After the display control circuit accomplishes transmitting the first video driving signal to the display screen, the backlight control circuit activates the first backlight source during a first period in order to provide backlight to the first display region which is driven by the first video driving signal for image display, and after the display control circuit accomplishes transmitting the second video driving signal to the display screen, the backlight control circuit activates the second backlight source during a second period in order to provide backlight to the second display region which is driven by the second video driving signal for image display.

In the following, the invention is further illustrated by way of example, taking reference to the following drawings. Thereof:
- FIG. 1: is a block function diagram illustrating a stereoscopic image display system according to an exemplary embodiment of the present invention;
- FIG. 2: is a timing diagram illustrating a first operational example of the video display apparatus shown in FIG. 1;
- FIG. 3: is a timing diagram illustrating a second operational example of the video display apparatus shown in FIG. 1;
- FIG. 4: is a timing diagram illustrating a third operational example of the video display apparatus shown in FIG. 1;
- FIG. 5: is a timing diagram illustrating a fourth operational example of the video display apparatus shown in FIG. 1; and
- FIG. 6: is a diagram illustrating the backlight source activation period of the operational example in FIG. 4 that is extended forward and/or backward.

### Detailed Description

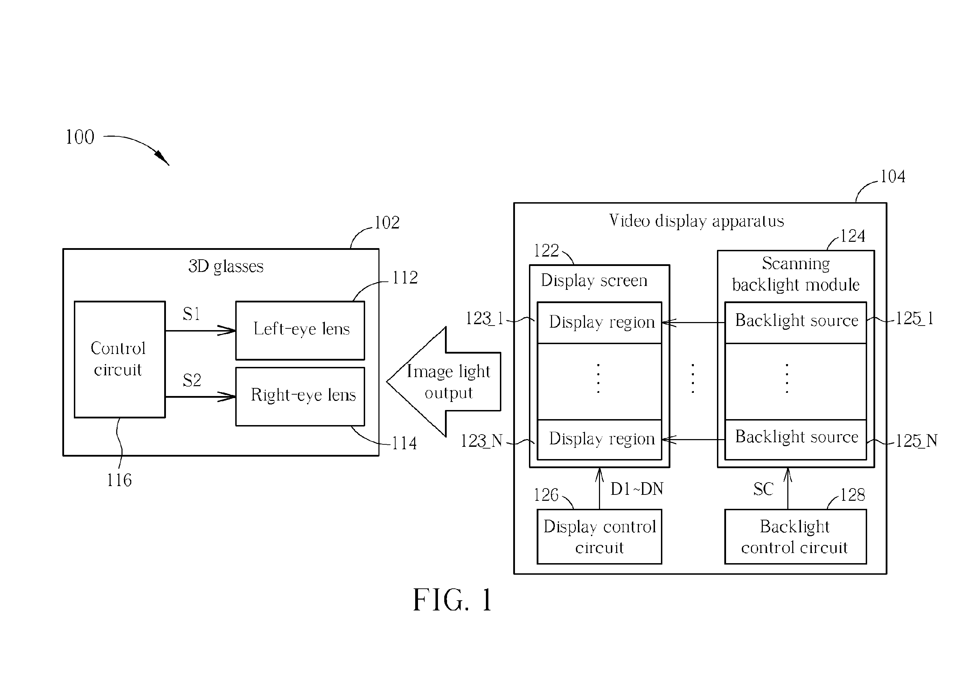

Please refer to FIG. 1, which is a block diagram illustrating a stereoscopic image display system according to an exemplary embodiment of the present invention. The stereoscopic image display system 100 includes three-dimensional (3D) glasses 102 and a video display apparatus 104, wherein the video display apparatus 104 collaborates with the 3D glasses 102 for presenting stereoscopic images for a user. The 3D glasses (e.g., shutter glasses) 102 include a left-eye lens 112, a right-eye lens 114 and a control circuit 116, wherein the control circuit 116 may respectively output a first control signal S1 and a second control signal S2 to the left-eye lens 112 and the right-eye lens 114 for controlling the on/off statuses of the left-eye lens 112 and the right-eye lens 114. Besides, in this exemplary embodiment, the video display apparatus 104 includes, but is not limited to, a display screen (e.g., an LCD panel) 122, a scanning backlight module 124, a display control circuit 126 and a backlight control circuit 128, wherein the display screen 122 includes a plurality of display regions 123_1-123_N, and the scanning backlight module 124 includes a plurality of backlight sources 125_1-125_n for respectively offering backlight to corresponding display regions 123_1-123_N. The display control circuit 126 is coupled to the display screen 122 and used for sequentially transmitting a plurality of video driving signals D1-DN corresponding to a same video frame to the display screen 122, for respectively driving the display regions 123_1-123_N to display a video frame (e.g., a left-eye video frame/right-eye video frame). The backlight control circuit 128 is coupled to the scanning backlight module 124. After the display control circuit 126 accomplishes transmitting the video driving signal D1 to the display screen 122, the backlight control circuit 128 outputs the backlight control signal SC to activate a corresponding backlight source 125_1 within a period to thereby provide backlight to the display region 123_1 which is driven by the video driving signal D1 for image display. Moreover, after the display control circuit 126 accomplishes transmitting the video driving signal D2 to the display screen 122, the backlight control circuit 128 activates a corresponding backlight source via the backlight control signal SC within a period to thereby provide backlight to the display region which is driven by the video driving signal D2 for image display. The rest may be deduced by analogy. Thus, after the display control circuit 126 accomplishes transmitting the video driving signal DN to the display screen 122, the backlight control circuit 128 activates a corresponding backlight source 125_N via the backlight control signal SC within a period to thereby provide backlight to the display region 123_N which is driven by the video driving signal DN for image display.

In order to clarify technical features of the present invention, a plurality of operational examples are provided hereinafter for illustrating the operation of the video display apparatus 104.

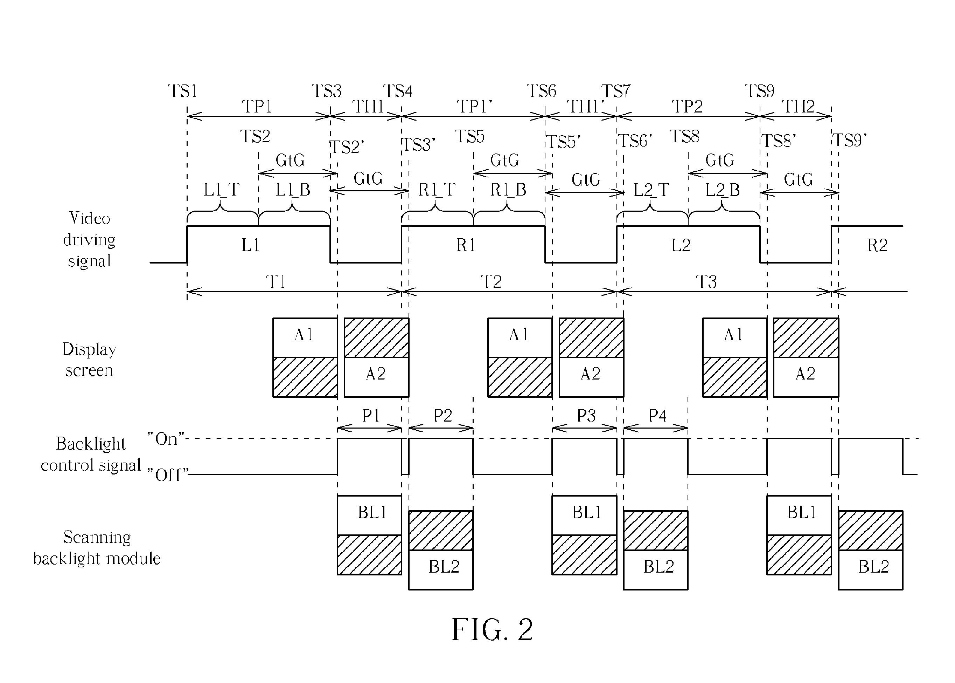

Please refer to FIG. 2, which is a timing diagram illustrating a first operational example of the video display apparatus 104 shown in FIG. 1. Under the premise of not affecting the disclosure of technical features of the present invention, it is assumed that the scanning backlight module 124 in this operational example only has two backlight sources BL1 and BL2 included therein. Therefore, the display screen 122 is only divided into two display regions A1 and A2, where the display regions A1 and A2 are respectively provided required backlight by the backlight sources BL1 and BL2. Since the video display apparatus 104 is operated under a lower refresh rate (e.g., 120Hz), the video display apparatus 110 displays a first video frame (e.g. L1 and L2) and a second video frame (e.g. R1 and R2) alternately in a plurality of video frame outputting periods (e.g., T1, T2 and T3), as shown in FIG. 2. One of the first video frame and the second video frame is a left-eye video frame, and the other of the first video frame and the second video frame is a right-eye video frame. In other words, in one exemplary embodiment, the first video frames L1 and L2 represent the left-eye video frames, and the second video frames R1 and R2 represent the right-eye video frames. However, in another exemplary embodiment, the first video frames L1 and L2 may represent the right-eye video frames, and the second video frames R1 and R2 may represent the left-eye video frames.

Moreover, as shown in the figure, each video frame outputting period includes a video driving period and a video stabilizing period. For example, the video frame outputting period T1 includes a video driving period TP1 and a video stabilizing period TH1, the video frame outputting period T2 includes a video driving period TP1' and a video stabilizing period TH1', the video frame outputting period T3 includes a video driving period TP2 and a video stabilizing period TH2, and so forth. In each video driving period, the display screen 122 (e.g., an LCD panel) successively sets pixels according to the display data, wherein pixels are driven line by line from the top to the bottom in a video frame and pixel by pixel from the left to the right in each line of the video frame to thereby output the current video frame to be displayed. Alternatively, according to a different placement setting or hardware design of the LCD panel, the display screen 112 may output the video frame to be displayed by successively setting pixels according to the display data, wherein the pixels are driven line by line from the bottom to the top in a video frame and pixel by pixel from the right to the left in each line in the video frame, or may be driven according to other pixel updating order. Therefore, before the current video frame to be displayed has totally replaced the previously displayed video frame, the display screen 112 will output an image that includes part of the current video frame and part of the previous video frame within the video driving period. In addition, within the following video stabilizing period, the display screen 112 will wait for stabilization of the current video frame to be displayed. For example, the display screen 122 does not drive pixels according to any display data. That is, each video stabilizing period may be a vertical blanking interval (VBI).

Suppose that the display screen 122 successively sets pixels according to the display data, wherein pixels are driven line by line from the top to the bottom in a video frame and pixel by pixel from the left to the right in each line of the video frame to thereby output the present video frame to be displayed. Therefore, as to the first video frame (e.g., a left-eye video frame) L1, the display control circuit 126 successively transmits video driving signals L1_T and L1_B to the display screen 122 for respectively driving the display regions A1 and A2. Therefore, the display control circuit 126 starts transmitting the driving information of the first scan line in the display region A1 at the time point TS1, and accomplishes transmitting the driving information of the last scan line in the display region A1 at the time point TS2. Besides, the display control circuit 126 starts transmitting the driving information of the first scan line in the display region A2 at the time point TS2, and accomplishes transmitting the driving information of the last scan line in the display region A2 at the time point TS3. Similarly, as to a second video frame (e.g., right-eye video frame) R1 immediately following the first video frame (e.g., a lest-eye video frame) L1, the display control circuit 126 successively transmits video driving signals R1_T and R1_B to the display screen 122 for respectively driving the display regions A1 and A2. Therefore, the display control circuit 126 starts transmitting the driving information of the first scan line in the display region A1 at the time point TS4, and accomplishes transmitting the driving information of the last scan line in the display region A1 at the time point TS5. Besides, the display control circuit 126 starts transmitting the driving information of the first scan line in the display region A2 at the time point TS5, and accomplishes transmitting the driving information of the last scan line in the display region A2 at the time point TS6.

Similarly, as to another first video frame (e.g., a left-eye video frame L2), the display control circuit 126 also successively transmits video driving signals L2_T and L2_B to the display screen 122 for respectively driving the display regions A1 and A2. Therefore, the display control circuit 126 starts transmitting the driving information of the first scan line in the display region A1 at the time point TS7, and accomplishes transmitting the driving information of the last scan line in the display region A1 at the time point TS8. Besides, the display control circuit 126 starts transmitting the driving information of the first scan line in the display region A2 at the time point TS8, and accomplishes transmitting the driving information of the last scan line in the display region A2 at the time point TS9.

Each of the LC cells in the display screen 122 (e.g., an LCD panel) requires a gray-to-gray latency GtG to rotate from a state corresponding to a gray value to a state corresponding to another gray value. Therefore, as to the first video frame L1, the display region A1 is not completely driven by the video driving signal L1_T to accomplish refreshing the content of the video frame until the time point TS2', and the display region A2 is not completely driven by the video driving signal L1_B to accomplish refreshing the content of the video frame until the time point TS3'. Similarly, as to the second video frame R1, the display region A1 is not completely driven by the video driving signal R1_T to accomplish refreshing the content of the video frame until the time point TS5', and the display region A2 is not completely driven by the video driving signal R1_B to accomplish refreshing the content of the video frame until the time point TS6'. Besides, as the another first video frame L2, the display region A1 is not completely driven by the video driving signal L2_T to accomplish refreshing the content of the video frame until the time point TS8', and the display region A2 is not completely driven by the video driving signal L2_B to accomplish refreshing the content of the video frame until the time point TS9'.

In this exemplary embodiment, since the video display apparatus 104 utilizes the scanning backlight module 124, the backlight source BL1 is activated during a period P1 between the time point TS2' (i.e., an end point of a predetermined delay period (e.g., the gray-to-gray latency GtG) starting from a time point when transmitting the video driving signal L1_T to the display screen 122 is accomplished) and the time point TS4 (i.e., a start time of transmitting the video driving signal R1_T to the display screen 122). That is, the backlight source BL1 is switched from the "OFF" state to the "ON" state at the time point TS2', and switched from the "ON" state to the "OFF" state at the time point TS4. Therefore, due to the activated backlight source BL1, the user is allowed to see the refreshed video content which is presented in the display region A1 completely driven by the video driving signal L1_T. Next, the backlight source BL2 is activated during a period P2 between the time point TS3' (i.e., an end point of a predetermined delay period (e.g., the gray-to-gray latency GtG) starting from a time point when transmitting the video driving signal L1_B to the display screen 122 is accomplished) and the time point TS5 (i.e., a start point of transmitting the video driving signal R1_B to the display screen 122) to allow the user to see the refreshed video content which is presented in the display region A2 completely driven by the video driving signal L1_B.

As shown in the figure, the start point of the period P1 is not earlier than the end point of the predetermined delay period (e.g., the gray-to-gray latency GtG) starting from the time point when transmitting the video driving signal L1_T to the display screen122 is accomplished, and the end point of the period P1 is not later than the start point of transmitting the video driving signal R1_T to the display screen 122; Similarly, the start point of the period P2 is not earlier than the end point of the predetermined delay period (e.g., the gray-to-gray latency GtG) starting from the time point when transmitting the video driving signal L1_B to the display screen122 is accomplished, and the end point of the period P2 is not later than the start point of transmitting the video driving signal R1_B to the display screen 122. Therefore, when the backlight sources BL1 and BL2 are activated successively, the user may see a full video content of the first video frame L1 that has completely replaced the previous video frame, and will not see the video content of the first video frame L1 that is partly updated by the following second video frame R1. Therefore, the crosstalk problem encountered by the conventional method is solved.

As to the second video frame R1, the backlight source BL1 is activated during a period P3 between the time point TS5' (i.e., an end point of a predetermined delay period (e.g., the gray-to-gray latency GtG) starting from a time point when transmitting the video driving signal R1_T to the display screen122 is accomplished) and the time point TS7 (i.e., a start point of transmitting the video driving signal L2_T to the display screen 122) to allow the user to see the updated video content of the display region A1 completely driven by the video driving signal R1_T. Besides, the backlight source BL2 is activated during a period P4 between the time point TS6' (i.e., an end point of a predetermined delay period (e.g., the gray-to-gray latency GtG) starting from a time point when transmitting the video driving signal R1_B to the display screen122 is accomplished) and the time point TS8 (i.e., a start point of transmitting the video driving signal L2_B to the display screen 122) to allow the user to see the updated video content of the display region A2 completely driven the video driving signal R1_B. Similarly, the start point of the period P3 is not earlier than the end point of the predetermined delay period (e.g., the gray-to-gray latency GtG) starting from the time point when transmitting the video driving signal R1_T to the display screen122 is accomplished, and the end point of the period P3 is not later than the start point of transmitting the video driving signal L2_T to the display screen 122. Moreover, the start point of the period P4 is not earlier than the end point of the predetermined delay period (e.g., the gray-to-gray latency GtG) starting from the time point when transmitting the video driving signal R1_B to the display screen122 is accomplished, and the end point of the period P4 is not later than the start point of transmitting the video driving signal L2_B to the display screen 122. Therefore, when the backlight source BL1 and BL2 are activated successively, the user may see a full video content of the second video frame R1 that has completely replaced the first video frame L1, and will not see the video content of the second video frame R1 that is partly updated by the following first video frame L2. Therefore, the crosstalk problem is solved.

It should be noted that the backlight module employed in the video display apparatus 104 of the present invention is a scanning backlight module 124 rather than a conventional plane backlight module. Therefore, the activation period of the scanning backlight module is not limited to the image stabilizing period (e.g., TH1, TH1', or TH2). So, compared with the plane scanning backlight module, the activation period of the scanning backlight module 124 would be longer, thus improving the brightness perceived by the user via the 3D glasses 102. Besides, when the backlight source 125_1-125_N in the video display apparatus 104 is activated, the backlight brightness is also increased to further improve the brightness perceived by the user via the 3D glasses 102.

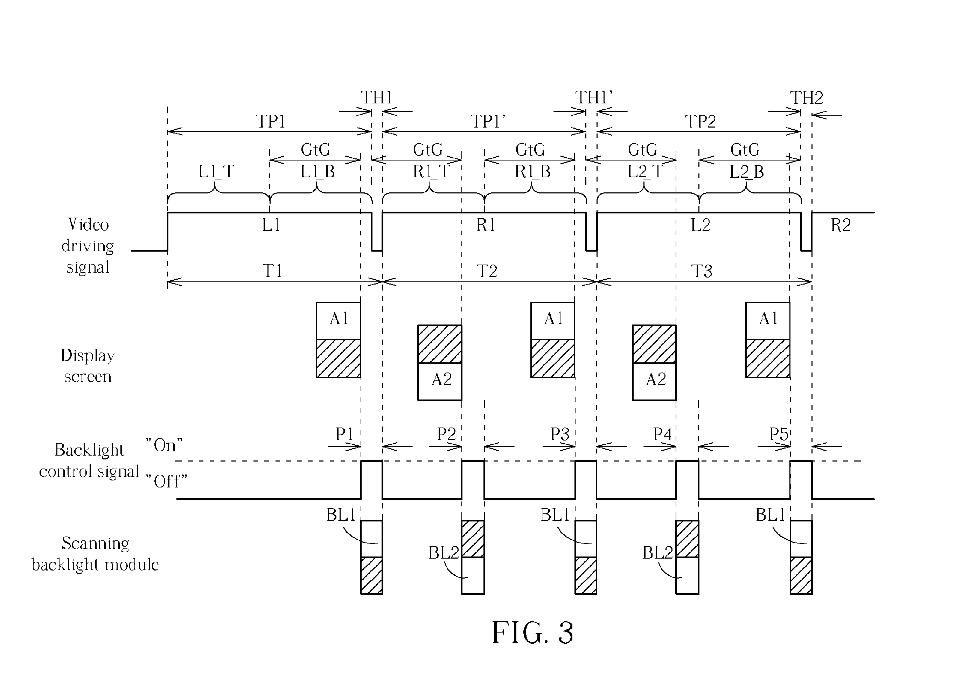

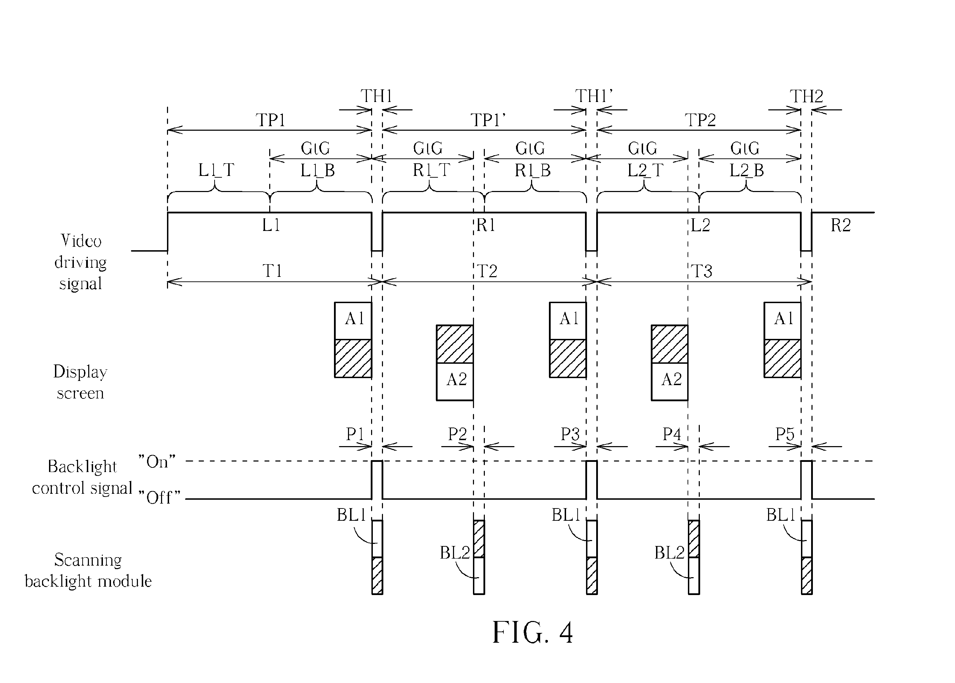

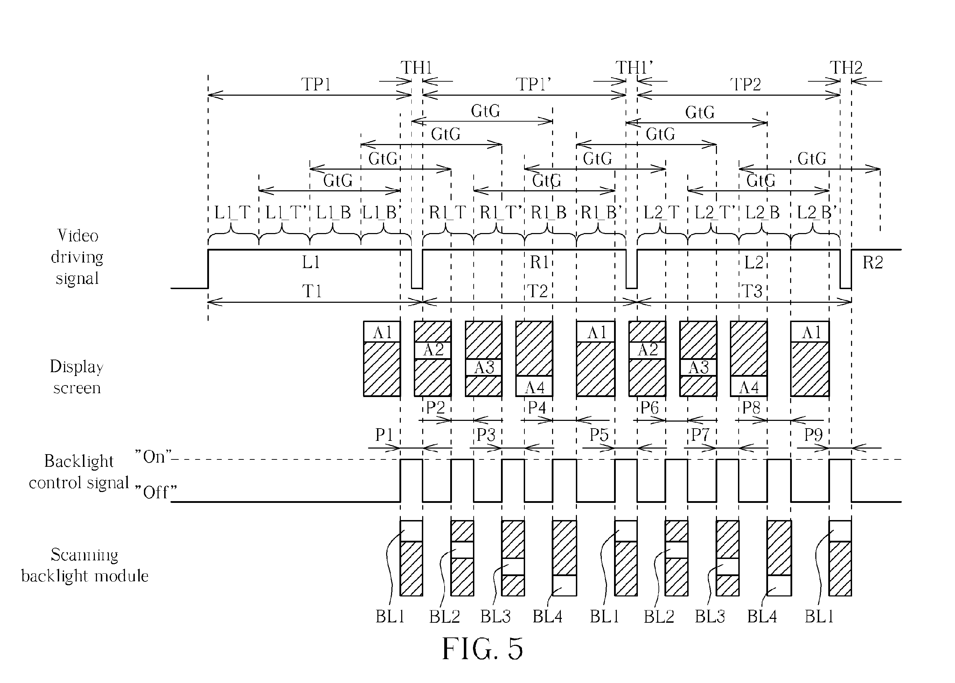

In the operational example shown in FIG. 2, the ratio of the video stabilizing period (e.g., TH1, TH1', or TH2) to the corresponding video frame output period (e.g., T1, T2, or T3) is about 33%, the gray-to-gray latency GtG of the display screen 122 is 3ms, and the number of the display regions in the display screen 122 and the number of the backlight sources in the scanning backlight module 124 are both 2. However, this is for illustrative purposes only, and is not meant to be a limitation to the present invention. In fact, the present invention is also applicable to a video display apparatus using a VBI with a different percentage setting, a different gray-to-gray latency, and/or different numbers of display areas and backlight sources. Please refer to FIG. 3 to FIG. 5, which are timing diagrams of the second, third and fourth operational examples of the video display apparatus 104 shown in FIG. 1, respectively. Compared with the first operational example shown in FIG. 1, the second operational example shown in FIG. 3 has a VBI with a lower percentage setting (e.g. 4.4%). Compared with the second operational example shown in FIG. 3, the third operational example shown in FIG. 4 has a longer gray-to-gray latency (e.g., 4ms). Compared with the third operational example shown in FIG. 4, the fourth operational example shown in FIG. 5 has a longer gray-to-gray latency (e.g., 5.5ms) as well as a larger numbers of display regions and backlight sources (e.g., 4). Since those skilled in the art will readily understand details of the second, third and fourth operational examples shown in FIG. 3-FIG. 5 according to the related illustration of the first operational example shown in FIG. 2, further description is omitted here for brevity.

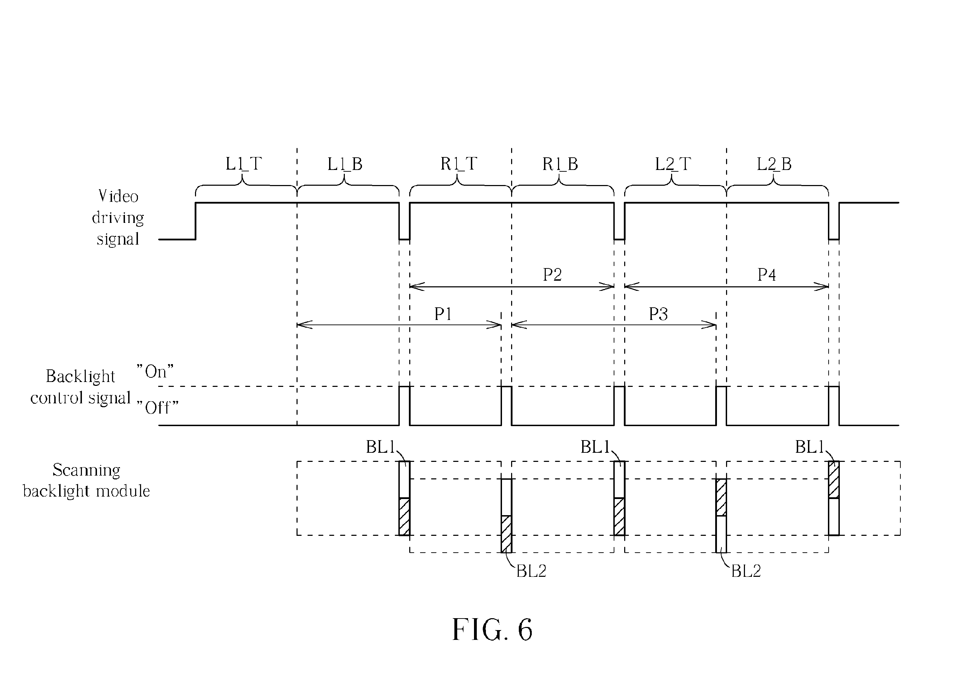

In the first, second, third and fourth operational examples mentioned above, the periods in which the backlight sources in the scanning backlight module 124 are activated are not overlapped with one another, in order to achieve the best crosstalk reduction effect. However, in order to further improve the brightness perceived by the user via the 3D glasses 102, the activation period may be extended forward and/or backward based on the initial backlight source activation period to increase the length of the backlight source activation period. Please refer to FIG. 6, which is a diagram illustrating the backlight source activation period of the operational example in FIG. 4 that is extended forward and/or backward. As to the period P1, the start point may be earlier than the end point of the predetermined delay period (e.g., the gray-to-gray latency) starting from the time point when transmitting the video driving signal L1_T to the display screen 122 is accomplished, and/or the end point may be later than the start point of transmitting the video driving signal R1_T to the display screen 122. As to the period P2, the start point may be earlier than the end point of the predetermined delay period (e.g., the gray-to-gray latency) starting from the time point when transmitting the video driving signal L1_B to the display screen 122 is accomplished, and/or the end point may be later than the start point of transmitting the video driving signal R1_B to the display screen 122. Similarly, the following periods (e.g. P3 and P4) may also be extended forward and/or backward to increase the length of the backlight source activation period.

Please note that, regarding other operational examples revealed in other figures, the activation period may also be extended forward and/or backward based on the initial backlight source activation period to increase the length of the backlight source activation period. Since those skilled in the art will readily understand related details according to the content shown in FIG. 6, further description is omitted here for brevity.

In brief, the backlight activation periods shown in FIG. 2 to FIG. 5 are for illustrative purposes only. In fact, under the premise of not departing from the spirit of the present invention, the backlight source activation period shown in FIG. 2 to FIG. 5 may have a lengthened time length, a shortened time length, an advanced start point, an advanced end point, a delayed start point, and/or a delayed end point. These alternative designs also fall within the scope of the present invention.

The video display apparatus 104 has to collaborate with 3D glasses 102 to present stereoscopic images for the user who wears the 3D glasses 102. For example, the 3D glasses 102 may be shutter glasses. Therefore, the left-eye lens 112 and the right-eye lens 114 are shutter lenses. With a proper control of on/off statues of the left-eye lens 112 and the right-eye lens 114, the 3D glasses 102 would allow the user to see a left-eye video frame via the left-eye lens 112 and see a right-eye video frame via the right-eye lens 114. In this way, the objective of presenting stereoscopic images is achieved. Moreover, the objective of adjusting/improving the ambient brightness by switching the shutter lens between the on status and the off status may also be achieved. The pertinent description can be found in other Taiwanese patent applications of the same inventor (e.g., Taiwanese patent application No. 099122342, Taiwanese patent application No. 099124293 and Taiwanese patent application No. 099126274). The whole contents of the counterpart U.S. patent applications, which claim the benefit of Taiwanese patent application No. 099122343, Taiwanese patent application No. 099124293, and Taiwanese patent application No. 099126274 respectively, are incorporated herein by reference. Further description directed to adjusting/improving the ambient brightness is therefore omitted here for brevity.

All combinations and sub-combinations of the above-described features also belong to the invention.

## Claims

1. A control method applied to a video display apparatus (104) which collaborates with three-dimensional glasses (102) for presenting stereoscopic images, the control method comprising:
sequentially transmitting a first video driving signal and a second video driving signal corresponding to a first video frame to a display screen (122), for respectively driving a first display region (123_1) and a second display region (123_2) of the display screen;
and **characterized by**:
after the step of transmitting the first video driving signal to the display screen (122) is accomplished, activating a first backlight source (125_1) of a scanning backlight module (124) during a first period in order to provide backlight to the first display region (123_1) which is driven by the first video driving signal for image display; and
after the step of transmitting the second video driving signal to the display screen (122) is accomplished, activating a second backlight source (125_2) of the scanning backlight module (124) during a second period in order to provide backlight to the second display region (123_2) which is driven by the second video driving signal for image display.

2. The control method of claim 1, **characterized in that** a start point of the first period is not earlier than an end point of a predetermined delay period starting from a time point when the step of transmitting the first video driving signal to the display screen (122) is accomplished, or a start point of the second period is not earlier than the end point of the predetermined delay period starting from a time point when the step of transmitting the second video driving signal to the display screen (122) is accomplished.

3. The control method of claim 1, **characterized in that** a start point of the first period is earlier than an end point of a predetermined delay period starting from a time point when the step of transmitting the first video driving signal to the display screen (122) is accomplished, or a start point of the second period is earlier than the end point of the predetermined delay period starting from a time point when the step of transmitting the second video driving signal to the display screen (122) is accomplished.

4. The control method of claim 1, further **characterized by**:
sequentially transmitting a third video driving signal and a fourth video driving signal corresponding to a second video frame to the display screen (122), for respectively driving the first display region (123_1) and the second display region (123_2), wherein the second video frame immediately follows the first video frame;
wherein an end point of the first period is not later than a time point of starting transmitting the third video driving signal to the display screen (122), or an end point of the second period is not later than a time point of starting transmitting the fourth video driving signal to the display screen (122).

5. The control method of claim 1, further **characterized by**:
sequentially transmitting a third video driving signal and a fourth video driving signal corresponding to a second video frame to the display screen (122), for respectively driving the first display region (123_1) and the second display region (123_2), wherein the second video frame immediately follows the first video frame;
wherein an end point of the first period is later than a time point of starting transmitting the third video driving signal to the display screen (122), or an end point of the second period is later than a time point of starting transmitting the fourth video driving signal to the display screen (122).

6. The control method of claim 1, **characterized in that** the first period is not overlapped with the second period.

7. The control method of claim 1, **characterized in that** the first period is partly overlapped with the second period.

8. A video display apparatus (104) which collaborates with three-dimensional glasses (102) for presenting stereoscopic images, comprising:
a display screen (122), comprising at least a first display region (123_1) and a second display region (123_2);
and **characterized by**:
a scanning backlight module (124), comprising at least a first backlight source (125_1) and a second backlight source (125_2);
a display control circuit (126), coupled to the display screen (122), for sequentially transmitting a first video driving signal and a second video driving signal corresponding to a first video frame to the display screen (122) for respectively driving the first display region (123_1) and the second display region (123_2); and
a backlight control circuit (128), coupled to the scanning backlight module (124), wherein after the display control circuit (126) accomplishes transmitting the first video driving signal to the display screen (122), the backlight control circuit (128) activates the first backlight source (125_1) during a first period in order to provide backlight to the first display region (123_1) which is driven by the first video driving signal for image display, and after the display control circuit (126) accomplishes transmitting the second video driving signal to the display screen (122), the backlight control circuit (128) activates the second backlight source (125_2) during a second period in order to provide backlight to the second display region (123_2) which is driven by the second video driving signal for image display.

9. The video display apparatus (104) of claim 8, **characterized in that** a start point of the first period is not earlier than an end point of a predetermined delay period starting from a time point when transmitting the first video driving signal to the display screen (122) is accomplished, or a start point of the second period is not earlier than the end point of the predetermined delay period starting from a time point when transmitting the second video driving signal to the display screen (122) is accomplished.

10. The video display apparatus (104) of claim 8, **characterized in that** a start point of the first period is earlier than an end point of a predetermined delay period starting from a time point when transmitting the first video driving signal to the display screen (122) is accomplished, or a start point of the second period is earlier than the end point of the predetermined delay period starting from a time point when transmitting the second video driving signal to the display screen (122) is accomplished.

11. The video display apparatus (104) of claim 8, **characterized in that** the display control circuit (126) further sequentially transmits a third video driving signal and a fourth video driving signal corresponding to a second video frame to the display screen (122) for respectively driving the first display region (123_1) and the second display region (123_2), wherein the second video frame immediately follows the first video frame; and an end point of the first period is not later than a time point of starting transmitting the third video driving signal to the display screen (122) or an end point of the second period is not later than a time point of starting transmitting the fourth video driving signal to the display screen (122).

12. The video display apparatus (104) of claim 8, **characterized in that** the display control circuit (126) further sequentially transmits a third video driving signal and a fourth video driving signal corresponding to a second video frame to the display screen (122) for respectively driving the first display region (123_1) and the second display region (123_2), wherein the second video frame immediately follows the first video frame; and an end point of the first period is later than a time point of starting transmitting the third video driving signal to the display screen (122) or an end point of the second period is later than a time point of starting transmitting the fourth video driving signal to the display screen (122).

13. The video display apparatus (104) of claim 8, **characterized in that** the first period is not overlapped with the second period.

14. The video display apparatus (104) of claim 8, **characterized in that** the first period is partly overlapped with the second period.
